(19) Europäisches Patentamt
European Patent Office
Office européen des brevets

(11) **EP 2 822 823 B1**

(12) **EUROPÄISCHE PATENTSCHRIFT**

(45) Veröffentlichungstag und Bekanntmachung des Hinweises auf die Patenterteilung:
**17.10.2018  Patentblatt 2018/42**

(21) Anmeldenummer: **13708751.6**

(22) Anmeldetag: **28.02.2013**

(51) Int Cl.:
*B60T 7/12* (2006.01)  *B60T 8/00* (2006.01)
*B60T 8/17* (2006.01)  *B60L 7/24* (2006.01)
*B60T 8/32* (2006.01)  *B60T 8/36* (2006.01)
*B60T 8/40* (2006.01)  *B60T 8/48* (2006.01)
*B60T 8/50* (2006.01)  *B60T 13/12* (2006.01)
*B60T 13/74* (2006.01)  *B60T 17/02* (2006.01)

(86) Internationale Anmeldenummer:
**PCT/EP2013/054059**

(87) Internationale Veröffentlichungsnummer:
**WO 2013/131806 (12.09.2013 Gazette 2013/37)**

(54) **VERFAHREN ZUM BETREIBEN EINER HYDRAULISCHEN ANLAGE UND BREMSANLAGE**

METHOD FOR OPERATING A HYDRAULIC SYSTEM AND BRAKE SYSTEM

PROCÉDÉ DE FONCTIONNEMENT D'UN SYSTÈME HYDRAULIQUE ET SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2012  DE 102012203499**
**26.02.2013  DE 102013203172**

(43) Veröffentlichungstag der Anmeldung:
**14.01.2015  Patentblatt 2015/03**

(73) Patentinhaber: **Continental Teves AG & Co. OHG**
**60488 Frankfurt am Main (DE)**

(72) Erfinder: **BILLER, Harald**
**65760 Eschborn (DE)**

(56) Entgegenhaltungen:
**EP-A1- 1 997 701    EP-A2- 1 873 028**
**WO-A1-2005/054028    WO-A1-2011/029812**
**DE-A1-102008 002 348    DE-A1-102008 041 760**
**DE-A1-102009 008 944    DE-A1-102010 020 002**
**DE-A1-102011 077 329    US-A1- 2011 241 419**

## Beschreibung

Die Erfindung betrifft ein Verfahren zum Betreiben einer hydraulischen Anlage gemäß dem Oberbegriff von Anspruch 1 sowie eine Bremsanlage gemäß dem Oberbegriff von Anspruch 14.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen oder des Hauptbremszylinders stattfindet.

Aus der internationalen Patentanmeldung WO 2011/029812 A1 ist eine "Brake-by-wire"-Bremsanlage mit einem bremspedalbetätigbaren Hauptbremszylinder, einem Wegsimulator und einer Druckbereitstellungseinrichtung bekannt. Die Radbremsen werden in einer "Brake-by-wire"-Betriebsart durch die Druckbereitstellungseinrichtung mit Druck beaufschlagt. In einer Rückfallbetriebsart werden die Radbremsen mittels des Bremspedal betätigbaren Hauptbremszylinders mit Druck beaufschlagt. Detaillierte Erläuterungen zur Einstellung der Sollbremsdrücke an den einzelnen Radbremsen werden nicht gegeben.

Weitere derartige Betriebsverfahren/Systeme sind aus den DE 10 2011 077 329 A1, DE 10 2009 008 944 A1 und WO 2005/054028 A1 bekannt.

Es ist Aufgabe der vorliegenden Erfindung, ein Verfahren zum Betreiben einer hydraulischen Anlage sowie eine Bremsanlage bereitzustellen, welches/welche eine fein dosierte Regelung der Drücke der Verbraucher ermöglicht.

Diese Aufgabe wird erfindungsgemäß durch ein Verfahren gemäß Anspruch 1 und eine Bremsanlage gemäß Anspruch 14 gelöst.

Der Erfindung liegt der Gedanke zugrunde, dass für jeden Verbraucher ein Druck-Volumen-Zusammenhang vorgegeben oder bestimmt wird, d.h. bekannt ist. Jeder Verbraucher wird einer ersten Gruppe oder einer zweiten Gruppe von Verbrauchern zugeordnet, wobei die erste Gruppe von Verbrauchern zumindest einen Verbraucher umfasst. Zur Einstellung von vorgegebenen, verbraucherindividuellen Solldrücken ist oder wird die erste Gruppe von Verbrauchern über jeweils das geöffnete Einlassventil mit der Druckbereitstellungseinrichtung verbunden, so dass die erste Gruppe mit dem Systemdruck der Druckbereitstellungseinrichtung beaufschlagt wird, und sind oder werden die Einlassventile der Verbraucher der zweiten Gruppe geschlossen, wobei das Einlassventil eines einzigen, ausgewählten Verbrauchers der zweiten Gruppe zum Aufbau eines Druckes geregelt geöffnet wird. Das bedeutet, dass zu jedem Zeitpunkt höchstens das das Einlassventil eines einzigen, ausgewählten Verbrauchers der zweiten Gruppe zum Aufbau eines Druckes geregelt geöffnet wird.

Bevorzugt handelt es sich um eine Bremsanlage, wobei der Systemdruck dem Bremssystemdruck der Druckbereitstellungseinrichtung entspricht.

Um den Solldruck des ausgewählten Verbrauchers möglichst genau einzustellen, wird bevorzugt das Einlassventil des ausgewählten Verbrauchers geregelt geöffnet, wobei eine volumengesteuerte Regelung des Einlassventils durchgeführt wird. Zur Regelung des Einlassventils wird besonders bevorzugt eine Auswertung anhand des von der Druckbereitstellungseinrichtung abgegebenen oder aufgenommenen Druckmittelvolumens (V), des Systemdrucks (P) und von Druck-Volumen-Zusammenhängen von Verbrauchern durchgeführt, um das Druckmittelaufnahmevolumen des ausgewählten Verbrauchers möglichst präzise zu berechnen.

Unter einem Druck-Volumen-Zusammenhang eines Verbrauchers wird erfindungsgemäß der Druckmittelbedarf bzw. die Volumenaufnahme des Verbrauchers in Abhängigkeit vom Druck, insbesondere Bremsdruck, oder anders ausgedrückt der Zusammenhang zwischen dem Druck und dem Druckmittel- bzw. Volumenbedarf des Verbrauchers, verstanden. Im Falle einer Bremsanlage entspricht der Druck einem Bremsdruck, welcher wiederum einem Bremsmoment entspricht.

Für jeden Verbraucher wird ein Druck-Volumen-Zusammenhang vorgegeben oder bestimmt. Dabei kann für alle Verbraucher oder eine Gruppe von Verbrauchern ein (gemeinsamer) Druck-Volumen-Zusammenhang vorgegeben werden oder es können verbraucherindividuelle Druck-Volumen-Zusammenhänge vorgegeben werden. Vorteilhafterweise werden der oder die Druck-Volumen-Zusammenhänge mit Hilfe der Druckbereitstellungseinrichtung in der Anlage bzw. Bremsanlage vorab bestimmt und werden dann im Folgenden für das erfindungsgemäße Verfahren herangezogen.

Die Anlage bzw. Bremsanlage umfasst bevorzugt je Verbraucher ein analogisiertes oder analog angesteuertes Einlassventil, um eine präzise Druckstellung zu erzielen.

Das erfindungsgemäße Verfahren wird bevorzugt in einer Anlage bzw. Bremsanlage durchgeführt, in welcher den Einlassventilen jeweils ein in Richtung der Druckbereitstellungseinrichtung öffnendes Rückschlagventil parallel geschaltet ist. Um das Abfließen von Druckmittel aus den Verbrauchern mit geschlossenem oder zeitweise geschlossenem Einlassventil zur Druckbereitstellungseinrichtung zu verhindern, ist der von der Druckbereitstellungseinrichtung bereitgestellte Systemdruck bevorzugt jederzeit größer als der größte Druck in einem Verbraucher der zweiten Gruppe.

Gemäß einer bevorzugten Weiterbildung der Erfindung wird die Regelung des Einlassventils des ausgewählten Verbrauchers anhand des von der Druckbereitstellungseinrichtung abgegebenen oder aufgenommenen Druckmittelvolumens, des Systemdrucks durchgeführt. Es werden der Druck-Volumen-Zusammenhang des ausgewählten Verbrauchers und der oder die Druck-Volumen-Zusammenhänge des oder der Verbraucher der ersten Gruppe herangezogen. Hierdurch kann eine genaue Bilanzierung des vom ausgewählten Verbraucher aufgenommenen Druckmittelvolumens durchgeführt werden. Der aktuelle Druck des ausgewählten Verbrauchers wird bevorzugt mittels des Druck-Volumen-Zusammenhangs des ausgewählten Verbrauchers aus einem berechneten Druckmittelaufnahmevolumen des ausgewählten Verbrauchers bestimmt. Besonders bevorzugt wird das Druckmittelaufnahmevolumen des ausgewählten Verbrauchers als Differenz zwischen einem von der Druckbereitstellungseinrichtung abgegebenen oder aufgenommenen Druckmittelvolumen und einem von dem oder den Verbrauchern der ersten Gruppe aufgenommenen oder abgegebenen Gruppen-Druckmittelvolumen berechnet. Das von der Druckbereitstellungseinrichtung abgegebene oder aufgenommene Druckmittelvolumen wird bevorzugt mittels einer Messvorrichtung (z.B. eines Sensors) direkt oder indirekt bestimmt, also direkt oder auch indirekt gemessen. Das Gruppen-Druckmittelvolumen wird vorteilhafterweise anhand des Systemdrucks und des oder der Druck-Volumen-Zusammenhänge des oder der Verbraucher der ersten Gruppe berechnet.

Gemäß einer bevorzugten Ausführungsform des erfindungsgemäßen Verfahrens werden diejenigen Verbraucher der zweiten Gruppe, bei welchen ein Druckaufbau durchgeführt werden soll, zeitlich nacheinander als ausgewählte Verbraucher betrachtet, deren Einlassventil geregelt geöffnet wird.

Bevorzugt wird bei denjenigen Verbrauchern der zweiten Gruppe, bei welchen ein Druckaufbau durchgeführt werden soll, ein Druckaufbau auf einen Solldruck durchgeführt, der kleiner als der Solldruck der ersten Gruppe ist.

Sobald der aktuelle Druck des ausgewählten Verbrauchers, welcher wie oben bereits erwähnt vorteilhafterweise berechnet wird, den für den ausgewählten Verbraucher vorgegebenen Solldruck erreicht hat, wird bevorzugt das Einlassventil des ausgewählten Verbrauchers geschlossen, so dass an einem anderen Verbraucher der zweiten Gruppe, als nächstem ausgewählten Verbraucher, ein Druckaufbau durch geregeltes Öffnen des Einlassventils aufgebaut werden kann.

Bevorzugt wird für ein Zeitintervall jeder Verbraucher einer ersten Gruppe oder einer zweiten Gruppe von Verbrauchern zugeordnet. In aufeinanderfolgen Zeitintervallen werden die Verbraucher dann vorteilhafterweise unterschiedlich der ersten oder der zweiten Gruppe zugeordnet. Die Aufteilung in Zeitintervalle und die jeweilige Zuordnung ist besonders bevorzugt von den zeitlichen Verläufen der vorgegebenen, verbraucherindividuellen Solldrücken abhängig.

Die erste Gruppe von Verbrauchern, die mit der Druckbereitstellungseinrichtung verbunden ist oder wird, wird bevorzugt durch die Verbraucher mit dem höchsten Solldruck gebildet. Alle übrigen Verbraucher gehören der zweiten Gruppe an. Die zweite Gruppe von Verbrauchern umfasst somit den- oder diejenigen Verbraucher, in denen ein Druckaufbau auf einem niedrigeren Druckniveau als dem höchsten Solldruck durchgeführt werden soll. Weiterhin kann die zweite Gruppe von Verbrauchern einen oder mehrere Verbraucher umfassen, in welchen der Druck gehalten oder abgebaut werden soll.

Vorteilhafterweise werden entsprechend den zeitlichen Verläufen der verbraucherindividuellen Solldrücke Zeitintervalle bestimmt, in welchen jeweils der oder die selben Verbraucher den höchsten Solldruck oder den höchsten Solldruckverlauf haben und damit der ersten Gruppe angehören.

Bevorzugt wird in der ersten Gruppe von Verbrauchern der vorgegebene Solldruckverlauf durch Regelung der Druckbereitstellungseinrichtung eingestellt. Da der oder die Verbraucher der ersten Gruppe mit der Druckbereitstellungseinrichtung über das oder die geöffneten Einlassventile verbunden ist oder sind, ist der Systemdruck der Druckbereitstellungseinrichtung gleich dem Druck in dem oder den Verbrauchern der ersten Gruppe.

Bevorzugt werden die verbraucherindividuellen Solldrücke von einem übergeordneten Regler vorgegeben. Besonders bevorzugt handelt es sich hierbei um einen elektronischen Bremskraftverteilungsregler, einen ABS-Regler (ABS: Antiblockiersystem), einen Fahrdynamik-Regler, z.B. ESP-Regler (ESP: elektronischen Stabilitätsprogramm), oder einen Regler zur Durchführung einer regenerativen Bremsung.

Bevorzugt leiten die Einlassventile im nicht angesteuerten Zustand die jeweiligen Drücke weiter, d.h. die Einlassventile sind stromlos offen ausgeführt.

Das von der Druckbereitstellungseinrichtung abgegebene oder aufgenommene Druckmittelvolumen wird bevorzugt mittels einer an oder in der Druckbereitstellungseinrichtung angeordneten Wegerfassungseinrichtung oder Lagenerfassungseinrichtung bestimmt.

Gemäß einer Weiterbildung der Erfindung umfasst die Anlage oder Bremsanlage einen Drucksensor zur Erfassung des von der Druckbereitstellungseinrichtung bereitgestellten Systemdrucks oder Bremssystemdrucks.

Bevorzugt wird die Druckbereitstellungseinrichtung durch eine Zylinder-Kolben-Anordnung gebildet, deren Kolben durch einen elektromechanischen Aktuator betätigbar ist. Dabei wird vorteilhafterweise das von der Druckbereitstellungseinrichtung abgegebene oder aufgenommene Druckmittelvolumen mittels einer Wegerfassungseinrichtung oder einer Lagenerfassungseinrichtung bestimmt, welche eine eine Position oder Lage des Kolbens charakterisierende Größe erfasst. Hierdurch ist eine präzise Druckstellung sowie Bestimmung des abgegebenen oder aufgenommenen Druckmittelvolumens möglich.

Weiterhin ist es bevorzugt, dass die Anlage bzw. Bremsanlage je Verbraucher, z.B. Radbremse, ein elektrisch ansteuerbares Auslassventil, vorteilhafterweise zur Verbindung des Verbrauchers mit einem Druckmittelvorratsbehälter, aufweist. Besonders bevorzugt sind die Auslassventile im nicht angesteuerten Zustand in einem gesperrten Zustand (stromlos geschlossen).

Die Erfindung betrifft auch eine Bremsanlage zur Durchführung eines erfindungsgemäßen Verfahrens.

Bevorzugt wird das Verfahren in einer Bremsanlage für Kraftfahrzeuge mit einem oder mehreren Bremskreisen durchgeführt, bei welcher jeder Bremskreis über eine hydraulische Verbindungsleitung mit einem, vorteilhafterweise stromlos offenen, Trennventil mit einem Hauptbremszylinder und über eine weitere hydraulische Verbindungsleitung mit einem, vorteilhafterweise stromlos geschlossenen, Zuschaltventil mit der Druckbereitstellungseinrichtung verbunden ist.

Bevorzugt handelt es sich um eine Bremsanlage für Kraftfahrzeuge, die in einer sog. "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Die Bremsanlage umfasst bevorzugt einen Pedalwegsimulator, welcher dem Fahrzeugführer in der "Brake-by-wire"-Betriebsart ein angenehmes Bremspedalgefühl vermittelt. Der Pedalwegsimulator ist besonders bevorzugt hydraulisch ausgeführt und mit dem Hauptbremszylinder verbunden oder verbindbar. Der Pedalwegsimulator ist vorteilhafterweise mittels eines Simulator-Freigabeventils an- und abschaltbar ausgeführt.

Weitere bevorzugte Ausführungsformen der Erfindung ergeben sich aus den Unteransprüchen und der nachfolgenden Beschreibung anhand einer Figur.

Es zeigen schematisch

Fig. 1 eine beispielsgemäße Bremsanlage zur Durchführung eines erfindungsgemäßen Verfahrens, und

Fig. 2 eine beispielsgemäße Bremsanlage für Kraftfahrzeuge.

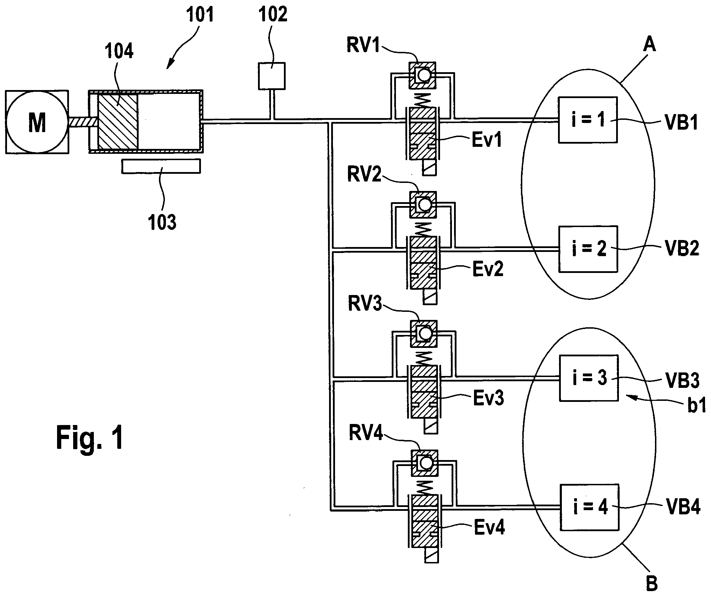

In Fig. 1 ist eine beispielsgemäße hydraulische Bremsanlage zur Durchführung eines erfindungsgemäßen Verfahrens stark schematisch dargestellt. Die Bremsanlage umfasst mehrere hydraulisch betätigbare Verbraucher VBi mit i=1 bis N, wobei beispielsgemäß vier Verbraucher VBi mit i=1 bis 4 dargestellt sind, und eine elektrisch steuerbare Druckbereitstellungseinrichtung 101, an welche die Verbraucher VBi über jeweils ein elektrisch ansteuerbares Einlassventil EVi (mit i=1 bis 4) angeschlossen sind. Jedem Einlassventil EVi ist ein in Richtung der Druckbereitstellungseinrichtung 101 öffnendes Rückschlagventil RVi (mit i=1 bis 4) parallel geschaltet. Der Druck $P_i$ in einem Verbraucher VBi kann daher nicht über dem Druck P in der Druckbereitstellungseinrichtung 101 liegen.

Beispielsgemäß wird die Druckbereitstellungseinrichtung 101 durch eine Zylinder-Kolben-Anordnung mit elektromechanischem Aktuator gebildet.

Druckbereitstellungseinrichtung 101 kann durch eine nicht dargestellte elektronische Steuer- und Regeleinheit geregelt betrieben werden. Diese Steuer- und Regeleinheit ist auch zur Ansteuerung der Einlassventil EVi ausgebildet.

Beispielsgemäß sind die Einlassventile EVi stromlos offen und als analogisierte oder analog angesteuerte Ventile ausgeführt.

Die Bremsanlage umfasst beispielsgemäß weiter einen Drucksensor 102, mittels welchem der von der Druckbereitstellungseinrichtung 101 bereitgestellte Bremssystemdruck P gemessen werden kann, sowie einen Wegsensor 103 zur Erfassung der Position/Lage des Kolbens 104 der Druckbereitstellungseinrichtung 101. Anhand der Änderung der Position/Lage des Kolbens 104 kann das von der Druckbereitstellungseinrichtung 101 abgegebenen oder aufgenommenen Druckmittelvolumen V bestimmt werden. Andere Sensoren zur Erfassung einer für die Position/Lage des Kolbens 104 der Druckbereitstellungseinrichtung 101 charakteristischen Größe sind denkbar, z.B. ein Rotorlagensensor zur Erfassung der Rotorlage eines Elektromotors M der Druckbereitstellungseinrichtung 101.

Fig. 1 zeigt die Einlassventile in ihrer stromlosen Position, d.h. vor Beginn einer verbraucherindividuellen Regelung der Bremsdrücke der Verbraucher. Anhand von Fig. 1 soll nun ein beispielsgemäßes Verfahren näher erläutert werden.

Es wird davon ausgegangen, dass die Druck-Volumen-Kennlinien $F_i$ der einzelnen Verbraucher VBi bekannt sind. Es ist denkbar, dass für zwei oder mehr Verbraucher jeweils die funktional gleiche Druck-Volumen-Kennlinie angenommen wird, jedoch ist für eine präzise Einstellung der Bremsdrücke der Verbraucher die Kenntnis der Verbraucherspezifischen Druck-Volumen-Kennlinien vorteilhaft. Die Druck-Volumen-Kennlinien $F_i$ können, z.B. in der Steuer- und Regeleinheit, vorgegeben sein. Die Druck-Volumen-Kennlinien $F_i$ können aber auch mit Hilfe der Druckbereitstellungseinrichtung 101 und der Einlassventile EVi durch die Bremsanlage selbst bestimmt bzw. gemessen werden und dann, z.B. in der Steuer- und Regeleinheit, abgespeichert werden.

Weiter wird davon ausgegangen, dass die gewünschten (zeitlichen) Solldruckverläufe $P_i^{Soll}$ (auch mit $P_i^{Soll}$ (t) bezeichnet) für jeden Verbraucher VBi über ein Zeitintervall $\Delta T$ bekannt oder (vor)gegeben sind. Diese verbraucherindividuellen Solldrücke $P_i^{Soll}$ können z.B. von einem übergeordneten Regler, wie z.B. einem ABS-Regler, einem Fahrdynamik-Regler oder einem Regler zur Durchführung einer regenerativen Bremsung, vorgegeben werden.

Die Verbraucher VBi werden nun jeder einer ersten Gruppe A oder einer zweiten Gruppe B von Verbrauchern zugeordnet. Die erste Gruppe A von Verbrauchern wird von denjenigen Verbrauchern gebildet, deren gewünschter Solldruck zu einem jeweiligen Zeitpunkt bzw. für ein jeweiliges Zeitintervall $\Delta t_n$ der größte Solldruck $P_A^{Soll}$ ist. Indem man das Zeitintervall klein genug wählt, kann erreicht werden, dass in jedem betrachteten

Zeitintervall $\Delta t_n$ eine solche Gruppe A festlegbar ist. Die erste Gruppe A kann auch nur einen einzigen Verbraucher umfassen. Die übrigen Verbraucher gehören der zweiten Gruppe B von Verbrauchern an.

Beispielsgemäß gehören für ein bestimmtes Zeitintervall $\Delta t_n$ die Verbraucher VB1 und VB2 zur ersten Gruppe A und die Verbraucher VB3 und VB4 zur zweiten Gruppe B (siehe Fig. 1) .

Die Einlassventile EV1, EV2 der ersten Gruppe A von Verbrauchern sind bzw. werden geöffnet. Der gewünschte Druckverlauf $P_A^{Soll}$ (t) in der ersten Gruppe A von Verbrauchern wird durch die Druckbereitstellungseinrichtung 101 geregelt. D.h. die Einlassventile EV1, EV2 der ersten Gruppe A von Verbrauchern bleiben in dem betrachteten Zeitintervall $\Delta t_n$, in welchem diese Verbraucher VB1, VB2 den höchsten Solldruck $P_A^{Soll}$ aller Verbraucher VBi haben, geöffnet und ein Druckaufbau bzw. ein Druckabbau in den Verbrauchern VB1, VB2 wird durch die Druckbereitstellungseinrichtung 101 eingestellt, z.B. durch Vor- oder Zurückfahren des Kolbens 104 der Druckbereitstellungseinrichtung 101. Der Druck P in der Druckbereitstellungseinrichtung 101 ist gleich dem Druck $P_A$ in den Verbrauchern EV1, EV2 der ersten Gruppe A im Sinne eines vollständigen Druckausgleichs zwischen dem oder den Verbrauchern der Gruppe A und der Druckbereitstellungseinrichtung.

Die Einlassventile EV3, EV4 der zweiten Gruppe B von Verbrauchern sind bzw. werden zunächst geschlossen. Die Einlassventile von Verbrauchern der zweiten Gruppe B, in denen der Bremsdruck gehalten oder abgebaut werden soll, bleiben geschlossen. Befinden sich in der zweiten Gruppe B von Verbrauchern ein oder mehrere Verbraucher, in denen ein Druckaufbau auf niedrigerem Druckniveau (niedriger als $P_A^{Soll}$) gewünscht bzw. vorgegeben ist (im folgenden mit Untergruppe B bezeichnet), so wird jeweils in einem einzigen dieser Verbraucher, welcher als ausgewählter Verbraucher b1 bezeichnet wird, ein Druckaufbau durch geregeltes Öffnen des entsprechenden Einlassventils durchgeführt, wobei bei mehreren Verbrauchern der Druckaufbau an den verschiedenen Verbrauchern sequentiell durchgeführt wird. Der Druckaufbau in dem ausgewählten Verbraucher b1 wird unter Verwendung der bekannten Druck-Volumen-Kennlinien $F_i$ durchgeführt.

Beispielsgemäß wird angenommen, dass in den Verbrauchern VB3 und VB4 ein Druckaufbau auf niedrigerem Druckniveau durchgeführt werden soll, d.h. die Untergruppe B entspricht beispielsgemäß der Gruppe B. Würde die zweite Gruppe B Verbraucher umfassen, in denen der Bremsdruck gehalten oder abgebaut werden soll, so wäre die Untergruppe B eine Teilmenge der zweiten Gruppe B. Zunächst wird Verbraucher VB3 als ausgewählter Verbraucher VBb1 gewählt, d.h. b1=3. Nur für den ausgewählten Verbraucher b1 der zweiten Gruppe B wird das Einlassventil EVb1 geregelt geöffnet, so dass ein dosierter Volumenstrom von der Druckbereitstellungseinrichtung 101 zum ausgewählten Verbraucher VBb1 entsteht. Es wird das Volumen V bestimmt bzw. gemessen, welches die Druckbereitstellungseinrichtung 101 abgibt (V>0) oder aufnimmt (V<0).

Das Druckmittelvolumen $V_A$, das die erste Gruppe A von Verbrauchern aufnimmt ($V_A>0$) oder abgibt ($V_A<0$), das sogenannte Gruppen-Druckmittelvolumen, wird aus dem Druckverlauf $P_A$(t) in der ersten Gruppe A von Verbrauchern (VB1 und VB2) und aus den entsprechenden Druck-Volumen-Kennlinien $F_1$ und $F_2$ berechnet. Der Druckverlauf $P_A$(t) in der ersten Gruppe A von Verbrauchern entspricht dem Druckverlauf P(t) in der Druckbereitstellungseinrichtung 101 und kann mittels des Drucksensors 102 gemessen werden.

Das Druckmittelvolumen $V_{b1}^{auf}$, das der ausgewählte Verbraucher b1 der zweiten Gruppe B aufnimmt (Druckmittelaufnahmevolumen $V_{b1}^{auf}$) wird aus der Differenz zwischen dem Volumen V und dem Gruppen-Druckmittelvolumen $V_A$ bestimmt:

$$V_{b1}^{auf} = V - V_A$$

Aus dem Druckmittelaufnahmevolumen $V_{b1}^{auf}$ wird mittels der entsprechenden Druck-Volumen-Kennlinie $F_{b1}$ der aktuelle Druck $P_{b1}$ im ausgewählten Verbraucher b1 der zweiten Gruppe B berechnet.

Nach einer vorgesteuerten Ansteuerung des Einlassventils EVb1, oder (geregelt) wenn der aktuelle Druck $P_{b1}$ des ausgewählten Verbrauchers b1=3 den gewünschten Druck $P_{b1}^{Soll}$ erreicht hat, wird das Einlassventil EVb1 des ausgewählten Verbrauchers geschlossen. Dann wird nach dem entsprechenden, oben beschriebenen Verfahren der Druck in einem anderen Verbraucher der Untergruppe B (d.h. in einem Verbraucher der zweiten Gruppe B, in welchem ein Druckaufbau auf niedrigerem Druckniveau durchgeführt werden soll), beispielsgemäß dem Verbraucher VB4, aufgebaut, d.h. der Verbraucher VB4 wird als nächster ausgewählter Verbraucher VBb1 gewählt, d.h. b1=4. So wird zeitlich nacheinander in allen Verbrauchern der Untergruppe B der gewünschte Druckaufbau durchgeführt.

Die Verbraucher der Untergruppe B müssen nicht in einer festen Reihenfolge reihum bedient werden. Der Verbraucher der Untergruppe B, in dem der nächste Druckaufbau durchgeführt werden soll, kann frei gewählt werden, beispielsweise in Abhängigkeit von der Abweichung zwischen gewünschtem und erreichtem Druck.

Fehler im dosierten Öffnen und Schließen der Einlassventile des oder der Verbraucher der Untergruppe B führen zwar zu Fehlern im Druckverlauf während des betroffenen Öffnungs- und Schließvorgangs. Die Genauigkeit der Druckinformation für den jeweiligen Verbraucher wird durch solche Fehler aber nicht beeinträchtigt, sondern hängt nur von der Kenntnis der Volumenaufnahme und der Volumenbilanz ab. Solche Fehler können also im nächsten Öffnungs- und Schließvorgang am selben Verbraucher kompensiert werden. Das Verfahren kann das Verhalten der Einlassventile (also den Zusammenhang zwischen Ansteuerung und Volumendurchsatz) auch unmittelbar lernen.

Bei dem beispielsgemäßen Verfahren werden während eines bestimmten Zeitintervalls Δtn die Einlassventile der ersten Gruppe A von Verbrauchern offen gehalten. Es sind auch alternative Verfahren denkbar, bei welchen nicht vorgesehen ist, die Einlassventile der ersten Gruppe A von Verbrauchern offen zu halten. Vorteilhafterweise können je nach Situation beide Verfahren mit ihren spezifischen Vorteilen verwendet werden.

Bevorzugt ist die Bremsanlage eine regenerative Bremsanlage für ein Kraftfahrzeug, wobei der Druckverlauf Teil einer (z.B. rekuperativen) Bremsung unter Beteiligung des elektrischen Antriebs ist. Die erste Gruppe A von Verbrauchern besteht aus den Radbremsen an der nicht angetriebenen Achse, die zweite Gruppe B aus den Radbremsen an der angetriebenen Achse, in denen der Bremsdruck so vermindert sein soll, wie es dem Beitrag des elektrischen Antriebs zur Fahrzeugverzögerung entspricht.

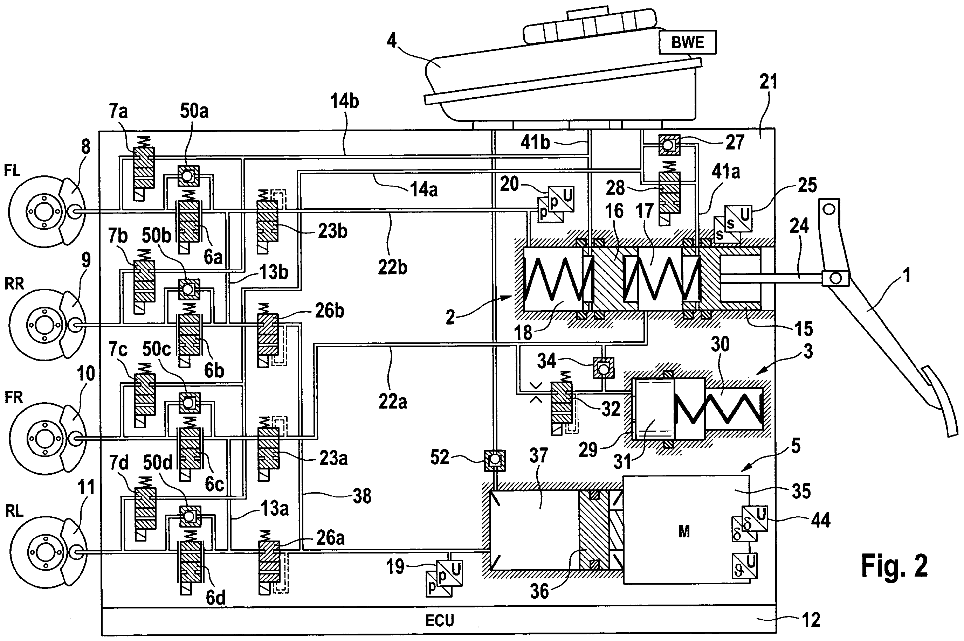

In Fig. 2 ist eine beispielsgemäße Bremsanlage für Kraftfahrzeuge zur Durchführung eines erfindungsgemäßen Verfahrens schematisch dargestellt. Die Bremsanlage umfasst im Wesentlichen eine mittels eines Betätigungs- bzw. Bremspedals 1 betätigbare hydraulische Betätigungseinheit 2, einen mit der hydraulischen Betätigungseinheit 2 zusammen wirkenden Wegsimulator bzw. Simulationseinrichtung 3, einen der hydraulischen Betätigungseinheit 2 zugeordneten, unter Atmosphärendruck stehenden Druckmittelvorratsbehälter 4, eine elektrisch steuerbare Druckbereitstellungseinrichtung 5, eine elektronische Steuer- und Regeleinheit 12 und eine elektrisch steuerbare Druckmodulationseinrichtung.

Die Druckmodulationseinrichtung umfasst beispielsgemäß je Radbremse 8, 9, 10, 11 eines nicht dargestellten Kraftfahrzeuges ein Einlassventil 6a-6d und ein Auslassventil 7a-7d, die paarweise über Mittenanschlüsse hydraulisch zusammengeschaltet und an die Radbremsen 8, 9, 10, 11 angeschlossen sind. Die Eingangsanschlüsse der Einlassventile 6a-6d werden mittels Bremskreisversorgungsleitungen 13a, 13b mit Drücken versorgt, die in einer "Brake-by-Wire"-Betriebsart aus einem Bremssystemdruck P abgeleitet werden, der in einer an einen Druckraum 37 der elektrisch steuerbaren Druckbereitstellungseinrichtung 5 angeschlossenen Systemdruckleitung 38 vorliegt. Den Einlassventilen 6a-6d ist jeweils ein zu den Bremskreisversorgungsleitungen 13a, 13b hin öffnendes Rückschlagventil 50a-50d parallel geschaltet. In einer Rückfallbetriebsart werden die Bremskreisversorgungsleitungen 13a, 13b über hydraulische Leitungen 22a, 22b mit den Drücken der Druckräume 17, 18 der Betätigungseinheit 2 beaufschlagt. Die Ausgangsanschlüsse der Auslassventile 7a-7d sind paarweise über Rücklaufleitungen 14a, 14b mit dem Druckmittelvorratsbehälter 4 verbunden.

Die hydraulische Betätigungseinheit 2 weist in einem Gehäuse 21 zwei hintereinander angeordnete Kolben 15, 16 auf, die hydraulische Kammern bzw. Druckräume 17, 18 begrenzen, die zusammen mit den Kolben 15, 16 einen zweikreisigen Hauptbremszylinder bzw. einen Tandemhauptzylinder bilden. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 in Verbindung, wobei diese durch eine Relativbewegung der Kolben 17, 18 im Gehäuse 21 absperrbar sind, und andererseits mittels der hydraulischen Leitungen 22a, 22b mit den bereits genannten Bremskreisversorgungsleitungen 13a, 13b in Verbindung, über die die Einlassventile 6a-6d an die Betätigungseinheit 2 angeschlossen ist. Dabei ist in der Druckausgleichsleitung 41a eine Parallelschaltung eines stromlos offenen (SO-) Diagnoseventils 28 mit einem zum Druckmittelvorratsbehälter 4 hin schließenden Rückschlagventil 27 enthalten. Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals 1 infolge einer Pedalbetätigung mit der Translationsbewegung des ersten (Hauptzylinder-)Kolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.

In den an die Druckräume 17, 18 angeschlossenen Leitungsabschnitten 22a, 22b ist je ein Trennventil 23a, 23b angeordnet, welches als je ein elektrisch betätigbares, vorzugsweise stromlos offenes (SO-) Ventil ausgebildet ist. Durch die Trennventile 23a, 23b kann die hydraulische Verbindung zwischen den Druckräumen 17, 18 und den Bremskreisversorgungsleitungen 13a, 13b abgesperrt werden. Ein an den Leitungsabschnitt 22b angeschlossener Drucksensor 20 erfasst den im Druckraum 18 durch ein Verschieben des zweiten Kolbens 16 aufgebauten Druck.

Wegsimulator 3 ist hydraulisch an den Hauptbremszylinder 2 angekoppelt und beispielsweise als eine eigenständige Baugruppe ausgebildet, die im Wesentlichen aus einer Simulatorkammer 29, einer Simulatorfederkammer 30 sowie einem die beiden Kammern 29, 30 voneinander trennenden Simulatorkolben 31 besteht. Simulatorkolben 31 stützt sich durch ein in Simulatorfederkammer 30 angeordnetes elastisches Element (z.B. eine Feder), welches vorteilhafterweise vorgespannt ist, am Gehäuse 21 ab. Die Simulatorkammer 29 ist mittels eines elektrisch betätigbaren Simulatorfreigabeventils 32 mit dem ersten Druckraum 17 des Tandemhauptbremszylinders 2 verbindbar. Bei Vorgabe einer Pedalkraft und aktiviertem Simulatorfreigabeventil 32 strömt Druckmittel vom Hauptbremszylinder-Druckraum 17 in die Simulatorkammer 29. Ein hydraulisch antiparallel zum Simulatorfreigabeventil 32 angeordnetes Rückschlagventil 34 ermöglicht unabhängig vom Schaltzustand des Simulator-freigabeventils 32 ein weitgehend ungehindertes Zurückströmen des Druckmittels von der Simulatorkammer 29 zum Hauptbremszylinder-Druckraum 17.

Die elektrisch steuerbare Druckbereitstellungseinrichtung 5 ist als eine hydraulische Zylinder-Kolben-Anordnung bzw. ein einkreisiger elektrohydraulischer Aktuator ausgebildet, dessen Kolben 36 von einem schematisch angedeuteten Elektromotor 35 unter Zwischenschaltung eines ebenfalls schematisch dargestellten Rotations-Translationsgetriebes betätigbar ist. Der Kolben 36 begrenzt einen Druckraum 37. Ein Nachsaugen von Druckmittel in den Druckraum 37 ist durch ein Zurückfahren des Kolbens 36 bei geschlossenen Zuschaltventilen 26a, 26b möglich, indem Druckmittel aus dem Druckmittelvorratsbehälter 4 über ein als in Strömungsrichtung zum Aktuator öffnendes Rückschlagventil ausgebildetes Nachsaugventil 52 in den Aktuatordruckraum 37 strömen kann.

Zur Erfassung einer für die Position/Lage des Kolbens 36 der Druckbereitstellungseinrichtung 5 charakteristischen Größe ist ein Sensor 44 vorhanden, welcher beispielsgemäß als ein der Erfassung der Rotorlage des Elektromotors 35 dienender Rotorlagensensor ausgeführt ist. Andere Sensoren sind ebenso denkbar, z.B. ein Wegsensor zur Erfassung der Position/Lage des Kolbens 36. Anhand der für die Position/Lage des Kolbens 36 charakteristischen Größe ist eine Bestimmung des von der Druckbereitstellungseinrichtung 5 abgegebenen oder aufgenommenen Druckmittelvolumens V möglich. Zum Erfassen des von der Druckbereitstellungseinrichtung 5 erzeugten Bremssystemdruckes P ist ein vorzugsweise redundant ausgeführter Drucksensor 19 vorgesehen.

In einer Normalbremsfunktion der Bremsanlage ("Brake-by-wire"-Betriebsart) ist Hauptbremszylinder 2, und damit der Fahrzeugführer, von den Radbremsen 8, 9, 10, 11 durch die geschlossenen Trennventile 23a, 23b entkoppelt und die Bremskreisversorgungsleitungen 13a, 13b sind über die geöffneten Zuschaltventile 26a, 26b mit der Druckbereitstellungseinrichtung 5 verbunden, welche den Systemdruck zur Betätigung der Radbremsen 8, 9, 10, 11 bereitstellt. Simulationseinrichtung 3 ist durch das geöffnete Simulatorfreigabeventil 32 zugeschaltet, so dass das durch die Betätigung des Bremspedals 1 durch den Fahrer im Hauptbremszylinder 2 verdrängte Druckmittelvolumen durch die Simulationseinrichtung 3 aufgenommen wird und die Simulationseinrichtung 3 dem Fahrzeugführer ein gewohntes Bremspedalgefühl vermittelt.

In der Normalbremsfunktion der Bremsanlage wird eine radindividuelle Bremsdruckregelung der Radbremsen 8-11 zur Einstellung von radindividuellen Solldrücken $P_i^{Soll}$ beispielsgemäß mittels der elektronischen Steuer- und Regeleinheit 12 durchgeführt. Hierzu ist in der Steuer- und Regeleinheit 12 für jeden Verbraucher ein Druck-Volumen-Zusammenhang hinterlegt oder es wird für jeden Verbraucher ein Druck-Volumen-Zusammenhang vorab bestimmt. Außerdem werden beispielsgemäß in der Steuer- und Regeleinheit 12 die radindividuellen Solldrücke $P_i^{Soll}$ bestimmt. In der elektronischen Steuer- und Regeleinheit kann so ein erfindungsgemäßes Verfahren durchgeführt werden.

In einer Rückfallbetriebsart der Bremsanlage, z.B. bei einem Ausfall der elektrischen Energieversorgung der gesamten Bremsanlage, ist Simulationseinrichtung 3 durch das stromlos geschlossene Simulatorfreigabeventil 32 abgeschaltet und die Druckbereitstellungseinrichtung 5 ist durch die stromlos geschlossenen Zuschaltventile 26a, 26b von den Bremskreisversorgungsleitungen 13a, 13b getrennt. Hauptbremszylinder 2 ist über die Leitungen 22a, 22b mit den stromlos offenen Trennventilen 23a, 23b mit den Bremskreisversorgungsleitungen 13a, 13b und damit den Radbremsen 8, 9, 10, 11 verbunden, so dass der Fahrzeugführer durch Betätigung des Bremspedals 1 direkt Druck in den Radbremsen 8, 9, 10, 11 aufbauen kann.

**Patentansprüche**

1. Verfahren zum Betreiben einer hydraulischen Anlage, insbesondere einer Bremsanlage, insbesondere für Kraftfahrzeuge, mit

   • mehreren Verbrauchern (VBi), insbesondere Radbremsen (8-11),
   • einer elektrisch steuerbaren Druckbereitstellungseinrichtung (101, 5), die ein Druckmittelvolumen zur Betätigung der Verbraucher (VBi) abgeben kann, wobei das von der Druckbereitstellungseinrichtung abgegebene oder aufgenommene Druckmittelvolumen (V) und der von der Druckbereitstellungseinrichtung bereitgestellte Systemdruck (P), insbesondere Bremssystemdruck, bestimmt werden (103, 102), und
   • einem zwischen Druckbereitstellungseinrichtung (101, 5) und Verbraucher angeordneten, elektrisch ansteuerbaren Einlassventil (EVi, 6a-6d) je Verbraucher (VBi, 8-11), wobei insbesondere den Einlassventilen jeweils ein in Richtung der Druckbereitstellungseinrichtung (101, 5) öffnendes Rückschlagventil (RVi, 50a-50d) parallel geschaltet ist,

   wobei für jeden Verbraucher (VBi, 8-11) ein Druck-Volumen-Zusammenhang ($F_i$) vorgegeben oder bestimmt wird, wobei, insbesondere für ein Zeitintervall ($\Delta t_n$), jeder Verbraucher (VBi, 8-11) einer ersten Gruppe (A) oder einer zweiten Gruppe (B) von Verbrauchern zugeordnet wird, wobei die erste Gruppe (A) von Verbrauchern zumindest einen Verbraucher umfasst, und wobei zur Einstellung von vorgegebenen, verbraucherindividuellen Solldrücken ($P_i^{Soll}$)

   • die erste Gruppe (A) von Verbrauchern (VB1, VB2) über jeweils das geöffnete Einlassventil (EV1, EV2) mit der Druckbereitstellungseinrichtung (101, 5) verbunden ist oder wird, so dass die erste Gruppe (A) mit dem Systemdruck (P, $P_a{}^{Soll}$) der Druckbereitstellungseinrichtung (101, 5) beaufschlagt wird, und
• die Einlassventile (EV3, EV4) der Verbraucher (VB3, VB4) der zweiten Gruppe (B) geschlossen sind oder werden, wobei das Einlassventil (EVb1) eines einzigen, ausgewählten Verbrauchers (VBb1) der zweiten Gruppe (B) zum Aufbau eines Druckes geregelt geöffnet wird, wobei die Regelung des Einlassventils (EVb1) des ausgewählten Verbrauchers (b1) anhand des von der Druckbereitstellungseinrichtung abgegebenen oder aufgenommenen Druckmittelvolumens (V), des Systemdrucks (P) und von Druck-Volumen-Zusammenhängen ($F_i$) von Verbrauchern (VBi) durchgeführt wird.

2. Verfahren nach Anspruch 1, **dadurch gekennzeichnet, dass** die Regelung des Einlassventils (EVb1) des ausgewählten Verbrauchers (b1) anhand des von der Druckbereitstellungseinrichtung abgegebenen oder aufgenommenen Druckmittelvolumens (V), des Systemdrucks (P), des Druck-Volumen-Zusammenhangs des ausgewählten Verbrauchers (VBb1) und des oder der Druck-Volumen-Zusammenhänge des oder der Verbraucher (VB1, VB2) der ersten Gruppe (A) durchgeführt wird.

3. Verfahren nach Anspruch 1 oder 2, **dadurch gekennzeichnet, dass** zur Einstellung des Solldrucks ($P_{b1}{}^{Soll}$) des ausgewählten Verbrauchers (VBb1) das Einlassventil (EVb1) des ausgewählten Verbrauchers geregelt geöffnet wird, wobei eine völumengesteuerte Regelung des Einlassventils (EVb1), insbesondere durch Auswertung von Druck-Volumen-Zusammenhängen ($F_i$) von Verbrauchern (VBi), durchgeführt wird.

4. Verfahren nach einem der Ansprüche 1 bis 3, **dadurch gekennzeichnet, dass** der aktuelle Druck ($P_{b1}$) des ausgewählten Verbrauchers mittels des Druck-Volumen-Zusammenhangs ($F_{b1}$) des ausgewählten Verbrauchers aus einem berechneten Druckmittelaufnahmevolumen ($V_{b1}{}^{auf}$) des ausgewählten Verbrauchers bestimmt wird.

5. Verfahren nach Anspruch 4, **dadurch gekennzeichnet, dass** das Druckmittelaufnahmevolumen ($V_{b1}{}^{auf}$) des ausgewählten Verbrauchers als Differenz zwischen einem von der Druckbereitstellungseinrichtung abgegebenen oder aufgenommenen Druckmittelvolumen (V) und einem von dem oder den Verbrauchern (VB1, VB2) der ersten Gruppe (A) aufgenommenen oder abgegebenen Gruppen-Druckmittelvolumen ($V_A$) berechnet wird.

6. Verfahren nach Anspruch 5, **dadurch gekennzeichnet, dass** das Gruppen-Druckmittelvolumen ($V_A$) anhand des Systemdrucks (P) und des oder der Druck-Volumen-Zusammenhänge ($F_1$, $F_2$) des oder der Verbraucher der ersten Gruppe (A) bestimmt wird.

7. Verfahren nach einem der Ansprüche 4 bis 6, **dadurch gekennzeichnet, dass** das Einlassventil (EVb1) des ausgewählten Verbrauchers geschlossen wird, wenn der aktuelle Druck ($P_{b1}$) des ausgewählten Verbrauchers den für den ausgewählten Verbraucher vorgegebenen Solldruck ($P_{b1}{}^{Soll}$) erreicht hat.

8. Verfahren nach einem der Ansprüche 1 bis 7, **dadurch gekennzeichnet, dass** diejenigen Verbraucher (VB3, VB4) der zweiten Gruppe (B), bei welchen ein Druckaufbau durchgeführt werden soll, zeitlich nacheinander der ausgewählte Verbraucher (VBb1) sind.

9. Verfahren nach einem der Ansprüche 1 bis 8, **dadurch gekennzeichnet, dass** bei denjenigen Verbrauchern der zweiten Gruppe (B), bei welchen ein Druckaufbau durchgeführt werden soll, ein Druckaufbau auf einen Solldruck durchgeführt wird, der kleiner als der Solldruck ($P_A{}^{Soll}$) der ersten Gruppe (A) ist.

10. Verfahren nach einem der Ansprüche 1 bis 9, **dadurch gekennzeichnet, dass** in aufeinanderfolgen Zeitintervallen die Verbraucher (VBi, 8-11)) unterschiedlich der ersten (A) oder der zweiten (B) Gruppe zugeordnet werden.

11. Verfahren nach einem der Ansprüche 1 bis 10, **dadurch gekennzeichnet, dass** die erste Gruppe (A) von Verbrauchern durch die Verbraucher mit dem, insbesondere in dem Zeitintervall ($\Delta t_n$) , höchsten Solldruck ($P_A{}^{Soll}$) gebildet wird.

12. Verfahren nach einem der Ansprüche 1 bis 11, **dadurch gekennzeichnet, dass** in der ersten Gruppe (A) von Verbrauchern durch Regelung der Druckbereitstellungseinrichtung (101, 5) der vorgegebene Solldruckverlauf ($P_A{}^{Soll}$) eingestellt wird.

13. Verfahren nach einem der Ansprüche 1 bis 12, **dadurch gekennzeichnet, dass** der von der Druckbereitstellungseinrichtung bereitgestellte Systemdruck (P) jederzeit größer als der größte Druck in einem Verbraucher (VB3, VB4) der zweiten Gruppe (B) ist.

14. Bremsanlage für Kraftfahrzeuge mit

• mehreren Radbremsen (8-11),
• einer elektrisch steuerbaren Druckbereitstellungseinrichtung (5), die ein Druckmittelvolumen (V) zur Betätigung der Radbremsen abgeben kann, wobei das von der Druckbereitstellungseinrichtung abgegebene oder aufgenommene Druckmittelvolumen (V) und der von der Druckbereitstellungseinrichtung bereitgestellte Bremssystemdruck (P) bestimmbar sind (44, 19),

• einem mittels eines Bremspedals (1) betätigbaren Hauptbremszylinder (2), welcher insbesondere mit den Radbremsen trennbar (23a, 23b) verbunden ist,

• einem zwischen Druckbereitstellungseinrichtung (5) und Radbremse angeordneten, elektrisch ansteuerbaren Einlassventil (6a-6d) je Radbremse (8-11), wobei insbesondere den Einlassventilen (6a-6d) jeweils ein in Richtung der Druckbereitstellungseinrichtung (5) öffnendes Rückschlagventil (50a-50d) parallel geschaltet ist, sowie

• einer elektronischen Steuer- und Regeleinheit (12) zur Ansteuerung der elektrisch steuerbaren Druckbereitstellungseinrichtung (5) sowie der Einlassventile (6a-6d),

**dadurch gekennzeichnet, dass** in der elektronischen Steuer- und Regeleinheit (12) ein Verfahren gemäß einem der Ansprüche 1 bis 13 durchgeführt wird.

15. Bremsanlage für Kraftfahrzeuge nach Anspruch 14, **dadurch gekennzeichnet, dass** diese Mittel umfasst, welche an zumindest einer Radbremse regeneratives oder rekuperatives Bremsen ermöglichen, insbesondere eine Bremsung unter Beteiligung eines elektrischen Antriebs des Kraftfahrzeugs ermöglichen.

**Claims**

1. Method for operating a hydraulic system, in particular a brake system, in particular for motor vehicles, having

• multiple consumers (VBi), in particular wheel brakes (8-11),

• an electrically controllable pressure providing device (101, 5) that can output a pressure medium volume for the purpose of actuating the consumer (VBi), wherein the pressure medium volume (V) that is output or received by the pressure providing device and the system pressure (P) in particular a brake system pressure that is provided by the pressure providing device are determined (103, 102), and

• an electrically controllable inlet valve (EVi, 6a-6d) for each consumer (VBi, 8-11) that is arranged between the pressure providing device (101, 5) and the consumer, wherein in particular a non-return valve (RVi, 50a-50d) that is open in the direction of the pressure providing device (101, 5) is connected in each case in parallel to the inlet valves,

wherein a pressure volume ratio ($F_i$) is predetermined or determined for each consumer (VBi, 8-11), wherein in particular for a time interval ($\Delta t_n$) each consumer (VBi, 8-11) is allocated to a first group (A) or a second group (B) of consumers, wherein the first group (A) of consumers comprises at least one consumer, and wherein for the purpose of setting predetermined, consumer-specific desired pressures ($P_i^{desired}$)

• the first group (A) of consumers (VB1, VB2) is or will be connected to the pressure providing device (101, 5) by way of in each case the opened inlet valve (EV1, EV2) so that the first group (A) is influenced by the system pressure ($P$, $P_a^{desired}$) of the pressure providing device (101, 5), and

• the inlet valves (EV3, EV4) of the consumers (VB3, VB4) of the second group (B) are or will be closed, wherein the inlet valve (EVb1) of an individual, selected consumer (VBb1) of the second group (B) is opened in a regulated manner for the purpose of building up a pressure, wherein the inlet valve (EVb1) of the selected consumer (b1) is regulated with reference to the pressure medium volume (V) that is output or received by the pressure providing device, and with reference to the system pressure (P) and pressure volume ratios ($F_i$) of consumers (VBi).

2. Method according to Claim 1, **characterized in that** the inlet valve (EVb1) of the selected consumer (b1) is regulated with reference to the pressure medium volume (V) that is output or received by the pressure providing device, and with reference to the system pressure (P) and with reference to the pressure volume ratio of the selected consumer (VBb1), and with reference to one or multiple pressure volume ratios of one or multiple consumers (VB1, VB2) of the first group (A).

3. Method according to Claim 1 or 2, **characterized in that** the inlet valve (EVb1) of the selected consumer is opened in a regulated manner for the purpose of setting the desired pressure ($P_{bi}^{desired}$) of the selected consumer (VBb1), wherein the inlet valve (EVb1) is regulated by controlling the volume, in particular by means of evaluating the pressure-volume ratios ($F_i$) of consumers (VBi).

4. Method according to any one of Claims 1 to 3, **char-**

**acterized in that** the prevailing pressure ($P_{b1}$) of the selected consumer is determined by means of the pressure volume ratio ($F_{b1}$) of the selected consumer from a calculated pressure medium volume ($V_{b1}^{up}$) requirement of the selected consumer.

5. Method according to Claim 4, **characterized in that** the required pressure medium volume ($V_{b1}^{up}$) of the selected consumer is calculated as the difference between one of the pressure medium volumes (V) that is output or received by the pressure providing device and a group pressure medium volume ($V_A$) that is received or output by one or multiple consumers (VB1, VB2) of the first group (A) .

6. Method according to Claim 5, **characterized in that** the group pressure medium volume ($V_A$) is determined with reference to the system pressure (P) and one or multiple pressure volume ratios ($F_1$, $F_2$) of one or multiple consumers of the first group (A).

7. Method according to any one of Claims 4 to 6, **characterized in that** the inlet valve (EVb1) of the selected consumer is closed if the prevailing pressure ($P_{b1}$) of the selected consumer has achieved the desired pressure ($P_{b1}^{desired}$) that has been pre-determined for the selected consumer.

8. Method according to any one of the Claims 1 to 7, **characterized in that** the consumers (VB3, VB4) of the second group (B) in which pressure is to be built up are the selected consumer (VBb1) chronologically one after the other.

9. Method according to any one of the Claims 1 to 8, **characterized in that** in the case of the consumers of the second group (B) in which pressure is to be built up pressure is built up to a desired pressure that is lower than the desired pressure ($P_A^{desired}$) of the first group (A) .

10. Method according to any one of the Claims 1 to 9, **characterized in that** the consumers (VBi, 8-11) are allocated in time intervals that follow one after the other either to the first group (A) or the second group (B).

11. Method according to any one of the Claims 1 to 10, **characterized in that** the first group (A) of consumers is formed by means of the consumer having the, in particular in the time interval ($\Delta t_n$) , highest desired pressure ($P_A^{desired}$).

12. Method according to any one of the Claims 1 to 11, **characterized in that** the predetermined desired pressure curve ($P_A^{desired}$) is set in the first group (A) of consumers by means of regulating the pressure providing device (101, 5).

13. Method according to any one of the Claims 1 to 12, **characterized in that** the system pressure (P) that is provided by the pressure providing device is at all times higher than the highest pressure in a consumer (VB3, VB4) of the second group (B).

14. Brake system for motor vehicles having

    • multiple wheel brakes (8-11),
    • an electrically controllable pressure providing device (5) that can output a pressure medium volume (V) for the purpose of actuating the wheel brakes, wherein it is possible to determine (44, 19) the pressure medium volume (V) that is output or received by the pressure providing device and the brake system pressure (P) that is provided by the pressure providing device,
    • a master brake cylinder (2) that can be actuated by means of a brake pedal (1) and is connected to the wheel brakes in a separable manner (23a, 23b),
    • an electrically controllable inlet valve (6a-6d) for each wheel brake (8-11), said inlet valve being arranged between the pressure providing device (5) and the wheel brake, wherein a non-return valve (50a-50d) that is open in the direction of the pressure providing device (5) is connected in each case in parallel in particular to the inlet valves (6a-6d), and also
    • an electronic control and regulating unit (12) for the purpose of controlling the electrically controllable pressure providing device (5) and also the inlet valves (6a-6d),

    **characterized in that** a method in accordance with any one of Claims 1 to 13 is implemented in the electronic control and regulating unit (12).

15. Brake system for motor vehicles according to Claim 14, **characterized in that** said brake system comprises means that renders possible regenerative or recuperative braking at at least one wheel brake, in particular a braking process in cooperation with an electrical drive of a motor vehicle.

## Revendications

1. Procédé pour faire fonctionner un équipement hydraulique, notamment un système de freinage, notamment pour des véhicules automobiles, comprenant

    * plusieurs récepteurs (VBi), notamment des freins de roue (8-11),
    * un dispositif de fourniture de pression (101, 5) pouvant être commandé électriquement, lequel peut délivrer un volume de fluide sous pression destiné à actionner les récepteurs (VBi), le volume de fluide sous pression (V) délivré ou absorbé par le dispositif de fourniture de pression et la pression de système (P), notamment la pression de système de freinage, fournie par le dispositif de fourniture de pression, étant déterminés (103, 102), et

* une vanne d'admission (EVi, 6a-6d) pouvant être excitée électriquement par récepteur (VBi, 8-11), disposée entre le dispositif de fourniture de pression (101, 5) et le récepteur, un clapet anti-retour (RVi, 50a-50d) s'ouvrant dans la direction du dispositif de fourniture de pression (101, 5) étant notamment respectivement branché en parallèle avec les vannes d'admission,

une relation pression-volume ($F_i$) étant prédéfinie ou déterminée pour chaque récepteur (VBi, 8-11), chaque récepteur (VBi, 8-11) étant associé, notamment pendant un intervalle de temps ($\Delta t_n$), à un premier groupe (A) ou à un deuxième groupe (B) de récepteurs, le premier groupe (A) de récepteurs comportant au moins un récepteur et, en vue du réglage de pressions de consigne ($P_i^{Soll}$) prédéfinies individuelles aux récepteurs,

* le premier groupe (A) de récepteurs (VB1, VB2) est ou sera relié au dispositif de fourniture de pression (101, 5) respectivement par le biais de la vanne d'admission (EV1, EV2) ouverte, de sorte que le premier groupe (A) est chargé avec la pression de système (P, $P_a^{Soll}$) du dispositif de fourniture de pression (101, 5), et
* les vannes d'admission (EV3, EV4) des récepteurs (VB3, VB4) du deuxième groupe (B) sont ou seront fermées, la vanne d'admission (EVb1) d'un récepteur (VBb1) individuel sélectionné du deuxième groupe (B) étant ouverte de manière régulée en vue d'établir une pression, la régulation de la vanne d'admission (EVb1) du récepteur (b1) sélectionné étant effectuée à l'aide du volume de fluide sous pression (V) délivré ou absorbé par le dispositif de fourniture de pression, de la pression de système (P) et des relations pression-volume ($F_i$) des récepteurs (VBi).

**2.** Procédé selon la revendication 1, **caractérisé en ce que** la régulation de la vanne d'admission (EVb) du récepteur (b1) sélectionné est effectuée à l'aide du volume de fluide sous pression (V) délivré ou absorbé par le dispositif de fourniture de pression, de la pression de système (P), de la relation pression-volume du récepteur (VBb1) sélectionné ou des relations pression-volume du ou des récepteurs (VB1, VB2) du premier groupe (A).

**3.** Procédé selon la revendication 1 ou 2, **caractérisé en ce que** pour le réglage de la pression de consigne

($P_i^{Soll}$) du récepteur (VBb1) sélectionné, la vanne d'admission (EVB1) du récepteur sélectionné est ouverte de manière régulée, une régulation asservie sur le volume de la vanne d'admission (EVB1) étant effectuée, notamment par interprétation des relations pression-volume ($F_i$) des récepteurs (VBi).

**4.** Procédé selon l'une des revendications 1 à 3, **caractérisé en ce que** la pression actuelle ($P_{b1}$) du récepteur sélectionné est déterminée au moyen de la relation pression-volume ($F_{b1}$) du récepteur sélectionné à partir du volume d'absorption de fluide sous pression ($V_{b1}^{auf}$) du récepteur sélectionné.

**5.** Procédé selon la revendication 4, **caractérisé en ce que** le volume d'absorption de fluide sous pression ($V_{b1}^{auf}$) du récepteur sélectionné est calculé en tant que différence entre un volume de fluide sous pression (V) délivré ou absorbé par le dispositif de fourniture de pression et volume de fluide sous pression de groupe ($V_A$) absorbé ou délivré par le ou les récepteurs (VB1, VB2) du premier groupe (A).

**6.** Procédé selon la revendication 4, **caractérisé en ce que** le volume de fluide sous pression de groupe ($V_A$) est déterminé à l'aide de la pression de système (P) et de la ou des relations pression-volume ($F_1$, $F_2$) du ou des récepteurs du premier groupe (A).

**7.** Procédé selon l'une des revendications 4 à 6, **caractérisé en ce que** la vanne d'admission (EVb1) du récepteur sélectionné est fermée lorsque la pression actuelle ($P_{b1}$) du récepteur sélectionné a atteint la pression de consigne ($P_{b1}^{Soll}$) prédéfinie pour le récepteur sélectionné.

**8.** Procédé selon l'une des revendications 1 à 7, **caractérisé en ce que** les récepteurs (VB3, VB4) du deuxième groupe (B) au niveau desquels doit être effectuée une mise en pression sont les récepteurs (VBb1) sélectionnés chronologiquement l'un après l'autre.

**9.** Procédé selon l'une des revendications 1 à 8, **caractérisé en ce qu'**au niveau des récepteurs du deuxième groupe (B) au niveau desquels doit être effectuée une mise en pression, une mise en pression est effectuée à une pression de consigne qui est inférieure à la pression de consigne ($P_A^{Soll}$) du premier groupe (A).

**10.** Procédé selon l'une des revendications 1 à 9, **caractérisé en ce que** les récepteurs (VBi, 8-11) sont associés différemment au premier (A) ou au deuxième groupe (B) dans des intervalles de temps successifs.

**11.** Procédé selon l'une des revendications 1 à 10, **ca-**

**ractérisé en ce que** le premier groupe (A) de récepteurs est formé par les récepteurs ayant la pression de consigne ($P_A{}^{Soll}$) la plus élevée, notamment dans l'intervalle de temps ($\Delta t_n$).

12. Procédé selon l'une des revendications 1 à 11, **caractérisé en ce que** la courbe de pression de consigne ($P_A{}^{Soll}$) prédéfinie est réglée dans le premier groupe (A) de récepteurs par régulation du dispositif de fourniture de pression (101, 5).

13. Procédé selon l'une des revendications 1 à 12, **caractérisé en ce que** la pression de système (P) fournie par le dispositif de fourniture de pression est à tout moment supérieure à la pression la plus élevée dans un récepteur (VB3, VB4) du deuxième groupe (B).

14. Système de freinage pour véhicules automobiles, comprenant

    * plusieurs freins de roue (8-11),
    * un dispositif de fourniture de pression (5) pouvant être commandé électriquement, lequel peut délivrer un volume de fluide sous pression (V) destiné à actionner les freins de roue, le volume de fluide sous pression (V) délivré ou absorbé par le dispositif de fourniture de pression et la pression de système (P) fournie par le dispositif de fourniture de pression pouvant être déterminés (44, 19),
    * un maître-cylindre de frein (2) pouvant être actionné au moyen d'une pédale de frein (1), lequel est notamment relié de manière déconnectable (23a, 23b) aux freins de roue,
    * une vanne d'admission (6a-6d) pouvant être excitée électriquement par frein de roue (8-11), disposée entre le dispositif de fourniture de pression (5) et le frein de roue, un clapet anti-retour (50a-50d) s'ouvrant dans la direction du dispositif de fourniture de pression (5) étant notamment respectivement branché en parallèle avec les vannes d'admission (6a-6d), et
    * une unité de commande et de régulation électronique (12) destinée à exciter le dispositif de fourniture de pression (5) pouvant être commandé électriquement ainsi que les vannes d'admission (6a-6d),

    **caractérisé en ce qu'**un procédé selon l'une des revendications 1 à 13 est mis en oeuvre dans l'unité de commande et de régulation électronique (12).

15. Système de freinage pour véhicules automobiles selon la revendication 14, **caractérisé en ce que** celui-ci comporte des moyens qui rendent possible un freinage régénératif ou récupératif à au moins un frein de roue, rendent notamment possible un freinage avec la participation d'un groupe propulseur électrique du véhicule automobile.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011029812 A1
- DE 102011077329 A1
- DE 102009008944 A1
- WO 2005054028 A1